# EUROPÄISCHE PATENTSCHRIFT

(11) **EP 1 186 093 B1**
(45) Veröffentlichungstag und Bekanntmachung des Hinweises auf die Patenterteilung: **02.05.2003**
(21) Anmeldenummer: 00929016.4
(22) Anmeldetag: 17.05.2000
(51) Int. Cl.: H02M 7/217

(54) **VORRICHTUNG UND VERFAHREN ZUR NETZSPANNUNGSABHÄNGIG THYRISTORGESTEUERTEN VORLADUNG DER AUSGANGSKONDENSATOREN EINES DREIPUNKT-PULSGLEICHRICHTERSYSTEMS**
DEVICE AND METHOD FOR LINE-VOLTAGE DEPENDENT THYRISTOR CONTROLLED PRE-CHARGING OF OUTPUT CAPACITORS IN A THREE-LEVEL PULSE RECTIFIER SYSTEM
DISPOSITIF ET PROCEDE POUR PRECHARGER, DE MANIERE COMMANDEE PAR UN THYRISTOR, EN FONCTION DE LA TENSION DE RESEAU, LES CONDENSATEURS DE SORTIE D'UN SYSTEME REDRESSEUR PULSE A TROIS NIVEAUX

(30) Priorität: 17.05.1999 AT 87099
(43) Veröffentlichungstag der Anmeldung: 13.03.2002
(73) Patentinhaber: Ascom Energy Systems AG, 3000 Bern 14 (CH)
(72) Erfinder: KOLAR, Johann, W., A-1050 Wien (AT); KORB, Wilhelm, D-59519 Mönesee-Stockum (DE)
(74) Vertreter: Roshardt, Werner Alfred, Dipl.-Phys.
(86) Internationale Anmeldenummer: AT0000134
(87) Internationale Veröffentlichungsnummer: WO00070735

(56) Entgegenhaltungen:
- EP-A- 0 660 498
- DE-A- 3 234 702
- DE-A- 3 237 488

## Beschreibung

Die Erfindung betrifft eine Vorrichtung zur Vorladung der Ausgangskondensatoren eines Dreipunkt-Plusgleichrichtersystems, wie im Oberbegriff des Patentanspruches 1 beschrieben, sowie ein Verfahren und eine Vorrichtung zu deren Steuerung.

Gemäß dem Stand der Technik werden zur Vorladung der Ausgangskondensatoren von Pulsgleichrichtersystemen, insbesondere der in der EP 0660498 beschriebenen Schaltung Vorwiderstände in die Zuleitungen gelegt und nach Aufbau der Ausgangsspannung durch Relaiskontakte überbrückt. Nachteile dieser Lösung bestehen im Platzbedarf der Vorladeeinrichtung sowie in der Fehleranfälligkeit und beschränkten Lebensdauer mechanischer Kontakte.

Aufgabe der Erfindung ist es daher, eine Vorladevorrichtung und ein Verfahren und eine Vorrichtung zu deren Steuerung zu schaffen, die durch geringen Platzbedarf gekennzeichnet ist und keine mechanischen Kontakte aufweist.

Dies wird erfindungsgemäß durch die kennzeichnenden Merkmale des Patentanspruches 1 erreicht. Weitere vorteilhafte Ausgestaltungen der Erfindung sind den Unteransprüchen zu entnehmen.

- Die in der EP 94 120 245.9-1242 (A 2612/93) beschriebene Schaltung eines Dreipunkt-Pulsgleichrichtersystems weist je Phase je einen über den Ausgangsklemmen einer Einphasen-Diodenbrücke liegenden Leistungstransistor auf, wobei die erste Wechselspannungs-Eingangsklemme der Diodenbrücke über eine Vorschaltinduktivität mit einer Netzspannungsklemme und die zweite Wechselspannungs-Eingangsklemme direkt mit dem kapazitiven Mittelpunkt der Ausgangsspannung verbunden ist. Weiters wird die, bezogen auf die Polarität der Ausgangsspannung positive Ausgangsklemme der Diodenbrücke über eine Freilaufdiode mit der positiven Ausgangsspannungsschiene und die negative Ausgangsspannungsschiene über eine weitere Freilaufdiode mit der negativen Ausgangsspannungsklemme der Diodenbrücke verbunden. Der durch die Eingangsinduktivität eingeprägte, i.a. sinusförmig und in Phase zur jeweiligen Netzspannung geführte Netzstromfluß erfolgt während einer Netzspannungs- bzw. Eingangsstromhalbschwingung kontinuierlich über eine der eingangsseitigen Dioden der Einphasenbrücke. Grundgedanke der Erfindung ist nun, in jeder Phase die mit der positiven Ausgangsklemme der Einphasendiodenbrücke verbundene Eingangsdiode durch einen Thyristor gleicher Ventilrichtung zu ersetzen und parallel zu diesem Thyristor eine Serienschaltung eines Vorladewiderstandes und einer in Flußrichtung des Thyristors weisenden Diode anzuordnen. Da aufgrund der zu 0 erzwungenen Stromsumme der Phasen stets in jedem Fall ein Phasenstrom positives Vorzeichen aufweist, d. h. physikalisch in die Netz-Eingangsklemme einer Einphasendiodenbrücke fließt, ist somit bei Inbetriebnahme des Gleichrichtersystems eine Begrenzung des Einschaltstromes durch jedenfalls einen Vorladewiderstand gegeben. Nach Ende des Vorladevorgangs bzw. nach Erreichen eines netzspannungsabhängigen Mindestwertes der Ausgangsspannung können die Thyristoren durch eine übergeordnete Steuervorrichtung gezündet und die Phasen-Vorladeeinrichtungen überbrückt werden. Ein wesentlicher Vorteil dieser Vorrichtung besteht neben der Vermeidung mechanischer Kontakte in der Möglichkeit der Integration der Thyristoren und gegebenenfalls auch der Vorladedioden in die Leistungshalbleiter einer Phase zusammenfassende Module, wodurch die benötigte Kühlkörperfläche und der externe Verschaltungsaufwand bzw. die Kosten der Vorladeeinrichtung minimiert werden.

Ein erfindungsgemäßes Verfahren zur Ansteuerung der Vorladethyristoren beschreibt der Patentanspruch 2. Hiebei wird der Thyristor nach Ende der Vorladung des Ausgangskreises (wie vorgehend beschrieben abgeleitet von einer Spannungs- oder Zeitbedingung) nur innerhalb der positiven Netzspannungshalbschwingung gezündet, innerhalb der er für die Führung des kontinuierlichen Eingangsstromes benötigt wird, wobei, um unter Berücksichtigung des schaltfrequenten Rippels des Eingangsstromes einen kontinuierlichen Stromfluß sicherzustellen, die Zündung bereits knapp vor dem Nulldurchgang der Phasenspannung zu positiven Werten erfolgt und bis knapp nach dem Nulldurchgang zu negativen Werten aufrechterhalten wird. Vorteile gegenüber einer kontinuierlichen Zündung bestehen in der höheren Festigkeit des Thyristors gegen innerhalb der negativen Spannungshalbschwingung auftretende steile Sperrspannungsänderungen. Weiters werden bei fehlendem Gatestrom die Sperrströme der Thyristoren und damit die Sperrverluste erheblich reduziert. Die Reduktion des Sperrstromes ist auch für die Möglichkeit eines Stand-by-Betriebes des Systems wesentlich, da durch einen hohen Sperrstrom der zwischen Ausgangsspannungsmittelpunkt und negativer Ausgangsspannungsschiene liegende Ausgangskondensator über die vom Ausgangsspannungsmittelpunkt zur Kathode des Vorladethyristors weisende Diode entladen und so die für den Betrieb des Systems wesentliche Symmetrie der Ausgangsspannungen ohne Möglichkeit einer Korrektur gestört wird.

Eine vorteilhafte Vorrichtung zur Realisierung des Ansteuerverfahrens nach Patentanspruch 2 beschreibt der Patentanspruch 3.

Die Spannungsversorgung der Ansteuervorrichtung erfolgt hiebei über eine mit Minuspotential (im weiteren auch als Bezugspotential oder Masse bezeichnet) an der Thyristorkathode liegende potentialfreie Gleichspannungsquelle. Diese wird in jeder Phase durch einen elektronisch betätigten Einschaltkontakt an den signalverarbeitenden Teil der Vorladeeinrichtung gelegt, der durch einen Spannungsteiler, eine Referenzspannungserzeugung und einen Komparator gebildet wird, dessen Ausgang an das Gate des Vorladethyristors geführt wird. Die Referenzspannung wird z.B. von der Kathode einer Zenerdiode, welche über einen Vorwiderstand mit positiver Versorgungsspannung verbunden ist, abgegriffen und an den negativen Eingang des Komparators gelegt, wobei die Anode der Zenerdiode mit Masse verbunden ist. Weiters wird zwischen der positiven Versorgungsspannungsschiene und dem netzseitigen Eingang des Brückenzweiges ein ohmscher Spannungsteiler angeordnet, dessen Abgriff an den positiven Eingang des Komparators gelegt und Ober einen Glättungskondensator mit Masse und über eine Diode mit der Kathode der Zenerdiode verbunden wird, um eine Begrenzung der am positiven Komparatoreingang auftretenden Spannung zu erreichen. Die Ansteuervorrichtung wird nach Abschluß der Vorladung des Ausgangskreises des Pulsgleichrichtensystems durch Schließen des Einschaltkontaktes durch eine übergeordnete Steuer- bzw. Überwachungseinrichtung aktiviert und womit an den negativen Komparatoreingang die Referenzspannung gelegt wird. Wird nun die Ansteuerung des Leistungstransistors freigegeben und steigt der zeitliche Mittelwert der schaltfrequent diskontinuierlichen Verlauf aufweisenden Spannung am Eingang des Brückenzweiges entsprechend dem Netzspannungsverlauf (bei Vernachlässigung des Grundschwingungsspannungsabfalls an der Vorschaltinduktivität ist mit Ausnahme von den Nulldurchgang nicht beeinflussenden Nullkomponenten am Eingang des Brückenzweiges die jeweilige Phasenspannung zu bilden) wird bei entsprechender Dimensionierung des Spannungsteilers zwischen positiver Versorgungsspannung und Brückenzweigeingang die Spannung am positiven Komparatoreingang die Referenzspannung übersteigen und dadurch eine Umschaltung des Komparatorausgangs bzw. eine Ansteuerung des Thyristors ausgelöst. Entsprechend wird nach Durchtritt der mittleren Brückenzweigeingangsspannung durch 0 die Ansteuerung des Thyristors wieder unterbunden, d.h. der Thyristor wird entsprechend Anspruch 2 nur innerhalb jener Netzspannungshalbschwingung gezündet, in der er zur Führung des Eingangsstromes benötigt wird.

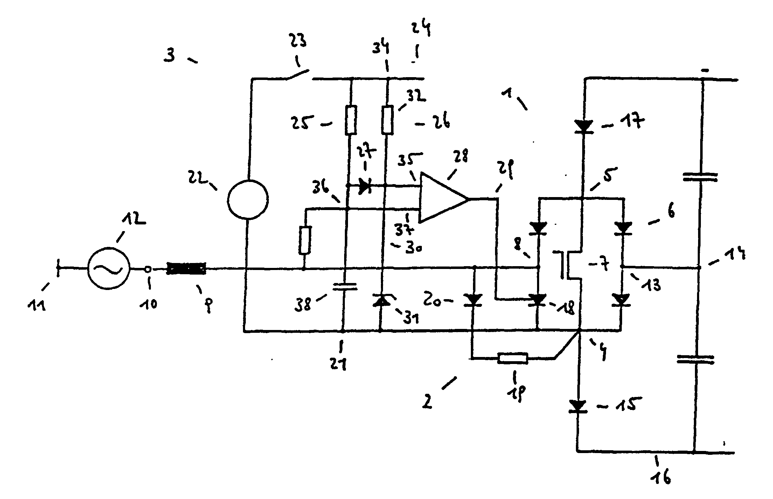

Die Erfindung wird im weiteren anhand eines in Fig. 1 dargestellten Ausführungsbeispiels näher erläutert. Es zeigt
Fig. 1 Die Grundstruktur (vereinfachte, schematische Darstellung) der erfindungsgemäßen Steuervorrichtung sowie des Leistungsteiles des Dreiphasen-Dreipunkt-Pulsgleichrichtersystems mit erfindungsgemäß integrierter Vorladeeinrichtung für eine Phase.

In Fig. 1 sind die Grundstruktur einer erfindungsgemäß modifizierten Phase 1 des Leistungsteiles eines Dreiphasen-Dreipunkt-Pulsgleichrichtersystems sowie ein Voriadezweig 2 und die erfindungsgemäße Struktur einer Ansteuerschaltung 3 der Vorladeeinrichtung dargestellt, wobei die gezeigte Vorrichtung in jeder Phase In gleicher Form Anwendung findet.

Der Phasenbrückenzweig 1 weist einen zwischen der positiven Ausgangsklemme 4 und der negativen Ausgangsklemme 5 einer Einphasen-Diodenbrücke 6 liegenden Leistungstransistor 7 auf, wobei die erste Wechselspannungs-Eingangsklemme 8 der Diodenbrücke über eine Vorschaltinduktivität 9 mit einer Netzspannungsklemme 10 bzw. die gegen den Netzstempunkt 11 definierte Netzspannung 12 und die zweite Wechselspannungs-Eingangsklemme 13 der Diodenbrücke 6 direkt mit dem kapazitiven Mittelpunkt 14 der Ausgangsspannung verbunden ist. Weiters ist die bezogen auf die Polarität der Ausgangsspannung positive Ausgangsklemme 4 der Diodenbrücke 6 über eine Freilaufdiode 15 mit der positiven Ausgangsspannungsschiene 16 und die negative Ausgangsspannungsschiene über eine weitere Freilaufdiode 17 mit der negativen Ausgangsspannungsklemme 5 der Diodenbrücke 6 verbunden. Zwischen positiver Ausgangsspannungsschiene 16 und Ausgangsspannungsmittelpunkt 14 und Ausgangsspannungsmittelpunkt und negativer Ausgangsspannungsschiene werden i.a. Stützkondensatoren angeordnet. Der durch die Eingangsinduktivität 9 eingeprägte, i.a. sinusförmig und in Phase zur jeweiligen Netzspannung 12 geführte Netzstromfluß erfolgt bei konventioneller Ausführung der Brückenzweige einer Netzspannungs- bzw. Eingangsstromhalbschwingung kontinuierlich über jeweils eine der eingangsseitigen Dioden der Einphasenbrücke 6. Bei erfindungsgemäßer Modifikation der Brükkenzweige wird die zwischen Brückenzweig-Eingangsklemme 8 und positiven Ausgangsklemme 4 der Einphasendiodenbrücke 6 liegende Eingangsdiode durch , einen Thyristor 18 gleicher Ventilrichtung ersetzt und parallel zu diesem Thyristor der Vorladezweig 2, bestehend aus der Serienschaltung eines Voriadewiderstandes 19 und einer in Flußrichtung des Thyristors weisende Diode 20 anzuordnen. Da aufgrund der zu 0 erzwungenen Stromsumme in jedem Fall ein Phasenstrom positives Vorzeichen aufweist, d.h. physikalisch in die Netz-Eingangsklemme 8 der Einphasendiodenbrücke 6 fließt, ist somit bei Inbetriebnahme des Gleichrichtersystems eine Begrenzung des Einschaltstromes durch jedenfalls einen Vorladewiderstand 19 einer Phase gegeben.

Der Vorladezweig 2 wird durch die Ansteuerschaltung 3 nach Ende des Vorladevorgangs bzw. nach Erreichen eines netzspannungsabhängigen Mindestwertes der Ausgangsspannung, detektiert durch eine übergeordnete Steuer- oder Überwachungseinheit des Gleichrichtersystems, über Zündung des Thyristors 18 überbrückt. Hiebei wird die mit Minuspotential 21 (im weiteren auch als Bezugspotential oder Masse bezeichnet) an der Thyristorkathode 4 liegende potentialfreie Gleichspannungsquelle 22 über einen Einschaltkontakt 23 an den signalverarbeitenden Teil 24 der Vorladeeinrichtung gelegt. Dieser wird durch einen Spannungsteiler 25, eine Referenzspannungserzeugung 26, eine Begrenzungsdiode 27 und einen Komparator 28 gebildet, dessen Ausgang an des Gate des Voriadethyristors 18 geführt wird. Die Referenzspannung wird von der Kathode 30 einer Zenerdiode 31, welche über einen Vorwiderstand 32 mit der positiven Versorgungsspannungsschiene 34 verbunden ist, abgegriffen und an den negativen Eingang 35 des Komparators 28 gelegt, wobei die Anode der Zenerdiode 31 mit Masse 21 verbunden ist. Weiters wird zwischen der positiven Versorgungsspannungsschiene 34 und dem netzseitigen Eingang 8 des Brückenzweiges 1 ein ohmscher Spannungsteiler 25 angeordnet, dessen Abgriff 36 an den positiven Eingang 37 des Komparators 28 gelegt und über einen Glättungskondensator 38 mit Masse 21 und über die Diode 27 in Flußrichtung mit der Kathode 30 der Zenerdiode 31 verbunden wird, um eine Begrenzung der am positiven Komparatoreingang 37 auftretenden Spannung zu erreichen.

Wie bereits vorstehend erwähnt, wird die Ansteuervorrichtung nach Abschluß der Vorladung des Ausgangskreises des Pulsgleichrichtersystems durch Schließen des Einschaltkontaktes 23 aktiviert, womit an den negativen Komparatoreingang 35 die Referenzspannung 30 gelegt wird. Wird nun die Ansteuerung des Leistungstransistors 7 durch eine übergeordnete Steuer- oder Überwachungseinheit freigegeben und steigt der zeitliche Mittelwert des schaltfrequent diskontinuierlichen Verlauf aufweisenden Potentials am Eingang 8 des Brückenzweiges entsprechend dem Netzspannungsverlauf 12 (bei Vernachlässigung des Grundschwingungsspannungsabfalls an der Vorschaltinduktivität 9 tritt mit Ausnahme von den Nulidurchgang nicht beeinflussenden Nullkomponenten am Eingang des Brückenzweiges 8 die jeweilige Netzphasenspannung 12 auf) wird bei entsprechender Dimensionierung des Spannungsteilers 25 die Spannung am positiven Komparatoreingang knapp vor Nulldurchgang der Netzspannung 12 zu positiven Werten (positives Potential von Netzklemme 10 gegenüber Stempunkt 11) die Referenzspannung 30 übersteigen und dadurch eine Umschaltung des Komparatorausgangs 29 bzw. eine Ansteuerung des Thyristors 18 ausgelöst. Entsprechend wird nach Durchtritt der mittleren Brückenzweigeingangsspannung durch 0 die Ansteuerung des Thyristors 18 wieder unterbunden, d.h. der Thyristor 18 wird unter Vernachlässigung geringfügiger, kontinuierlichen Verlauf des Eingangsstromes im Nulldurchgang sicherstellender Überlappungen entsprechend Anspruch 2 vorteilhaft nur innerhalb jener Netzspannungshalbschwingung gezündet, in der er zur Führung des durch die Eingangsinduktivität 9 eingeprägten Netzphasenstromes benötigt wird.

## Patentansprüche

1. Vorrichtung zur Vorladung der Ausgangskondensatoren eines Dreiphasen-Dreipunkt-Pulsgleichrichtersystems, welches in jeder Phase in konventioneller Ausführung eine Einphasen-Diodenbrücke (6), einen Leistungstransistor (7), eine Vorschaltinduktivität (9) und Freilaufdioden (15) und (17) aufweist, **dadurch gekennzeichnet, daß** in jeder Phase, die anodenseitig mit der Eingangsklemme (8) und kathodenseitig mit der Anode der in Flußrichtung zur positiven Ausgangsspannungsschiene (16) geschalteten Freilaufdiode (15) verbundene Diode der Einphasendiodenbrücke (6) durch einen Thyristor (18) gleicher Ventilrichtung ersetzt und parallel zu diesem Thyristor ein Vorladezweig (2) bestehend aus der Serienschaltung eines Vorladewiderstandes (19) und einer in Flußrichtung des Thyristors weisender Diode (20) angeordnet wird.

2. Verfahren zur Steuerung der Vorladevorrichtung nach Anspruch 1, **dadurch gekennzeichnet, daß** der Thyristor (18) nach Vorladung des Ausgangskreises, wie durch eine übergeordnete Steuer- oder Überwachungseinheit in an sich bekannter Weise von einer Spannungs- oder Zeitbedingung abgeleitet, nur innerhalb der positiven Netzspannungshalbschwingung, d.h. wenn die Netzspannungsklemme (10) ein höheres Potential als der Netzstempunkt (11) aufweist, gezündet wird, innerhalb der er für die Führung des durch die zugehörige Eingangsinduktivität (9) eingeprägten kontinuierlichen Eingangsstromes benötigt wird, wobei, um unter Berücksichtigung des schaltfrequenten Rippels des Eingangsstromes in der Induktivität (9) einen kontinuierlichen Stromfluß sicherzustellen, die Zündung bereits knapp vor dem Nulldurchgang der Phasenspannung (12) zu positiven Werten erfolgt und bis knapp nach dem Nulldurchgang zu negativen Werten aufrechterhalten wird.

3. Vorrichtung zur Realisierung des Verfahrens nach Anspruch 2, **dadurch gekennzeichnet, daß** in jeder Phase eine mit Minuspotential (21) bzw. Masse an der Thyristorkathode (4) liegende potentialfreie Versorgungs-Gleichspannung (22) über einen Einschaltkontakt (23) an den signalverarbeitenden Teil (24) der Vorladeeinrichtung gelegt wird, welcher durch einen Spannungsteiler (25) eine Referenzspannungserzeugung (26), eine Begrenzungsdiode (27) und einen Komparator (28), dessen Ausgang (29) an das Gate des Vorladethyristors (18) geführt wird, gebildet wird, wobei die Referenzspannung von der Kathode (30) einer Zenerdiode (31), welche über einen Vorwiderstand (32) mit positiver Versorgungsspannungsschiene (34) verbunden ist, abgegriffen und an den negativen Eingang (35) des Komparators (28) gelegt wird, wobei die Anode der Zenerdiode (31) mit Masse (21) verbunden ist und weiters zwischen der positiven Versorgungsspannungsschiene (34) und dem netzseitigen Eingang (8) des Brückenzweiges (1) ein ohmscher Spannungsteiler (25) angeordnet wird, dessen Abgriff (36) an den positiven Eingang (37) des Komparators (28) gelegt und über einen Glättungskondensator (38) mit Masse (21) und, um eine Begrenzung der am positiven Komparatoreingang (37) auftretenden Spannung zu erreichen, Ober die Diode (27) in Flußrichtung mit der Kathode (30) der Zenerdiode (31) verbunden wird, wobei die Ansteuervorrichtung (3) nach Abschluß der Vorladung des Ausgangskreises des Pulsgleichrichtersystems, detektiert durch eine übergeordnete Steuer- oder Überwachungsvorrichtung, durch Schließen des Einschaltkontaktes (23) aktiviert und damit an den negativen Komparatoreingang (35) die Referenzspannung (30) gelegt wird und so bei Ansteigen des am Abgriff des Spannungsteilers (36) vorliegenden, hinsichtlich schaltfrequenter Änderungen durch einen Kondensator (38) geglätteten Potentialveriaufs an Eingang (8) des Brückenzweiges über entsprechende Dimensionierung des Spannungsteilers (25) die Spannung am positiven Komparatoreingang knapp vor Nulldurchgang der Netzspannung (12) zu positiven Werten die Referenzspannung (30) übersteigt und dadurch eine Umschaltung des Komparatorausgangs (29) bzw. eine Ansteuerung des Thyristors (18) ausgelöst wird und entsprechend nach Durchtritt des mittleren Brückenzweigeingangspotentials bzw. der mit Ausnahme von Nullkomponenten weitgehend ident verlaufenden Netzphasenspannung (12) durch 0 die Ansteuerung des Thyristors (18) wieder unterbunden und so der Thyristor (18) unter Vernachlässigung geringfügiger kontinuierlichen Verlauf des Eingangsstromes im Nulldurchgang sicherstellender Überlappungen nur innerhalb jener Netzspannungshalbschwingungen gezündet wird, innerhalb der er zur Führung des durch die Eingangsinduktivität (9) eingeprägten Netzphasenstromes benötigt wird.

## Claims

1. Apparatus for initial charging of the output capacitors of a three-phase, three-point pulsed rectifier system which has, in a conventional configuration in each phase, a single-phase diode bridge (6), a power transistor (7), a series inductance (9) and freewheeling diodes (15) and (17), **characterized in that**, in each phase, that diode in the single-phase diode bridge (6) which is connected on the anode side to the input terminal (8) and on the cathode side to the anode of the freewheeling diode (14) connected to the positive output voltage rail (16) in the current flow direction is replaced by a thyristor (18) of the same polarity and, arranged in parallel with this thyristor, an initial charging path (2), comprising a series circuit formed by a series resistor (19) and a diode (20), pointing in the same current flow direction as the thyristor.

2. Method for controlling the initial charging apparatus according to claim 1, **characterized in that**, after initial charging of the output circuit, as derived by a higher-level control or monitoring unit in a manner known per se from a voltage or time condition, the thyristor (18) is triggered only within the positive mains voltage half-cycle, that is to say when the mains voltage terminal (10) is at a higher potential than the mains star point (11), within which half-cycle it is required for carrying the continuous input current produced by the associated input inductance (9), with the triggering actually taking place slightly before the zero crossing of the phase voltage (12) to positive values and is maintained until shortly after the zero crossing to negative values in order to ensure a continuous current flow taking into account the switching-frequency ripple on the input current into the inductance (9).

3. Apparatus for carrying out the method according to claim 2, **characterized in that**, in each phase, a floating DC supply voltage (22), which is connected to the negative potential (21) or to ground on the thyristor cathode (4), is connected via a switch-on contact (23) to the signalprocessing part (24) of the initial charging device, which part (24) is formed by a voltage divider (25), a reference voltage generator (26), a limiting diode (27) and a comparator (28) whose output (29) is connected to the gate of the initial charging thyristor (18), with the reference voltage being tapped off from the cathode (30) of a zener diode (31) which is connected via a series resistor (32) to the positive supply voltage rail (34), and being connected to the negative input (35) of the comparator (28), with the anode of the zener diode (31) being connected to ground (21) and, furthermore, with a resistive voltage divider (25) being arranged between the positive supply voltage rail (34) and the mains-side input (6) of the bridge path (1), the tap (36) of which resistive voltage divider (25) is connected to the positive input (37) of the comparator (28) and, via a smoothing capacitor (38) to ground (21) and, in order to limit the voltage which occurs at the positive comparator input (37), being connected via the diode (27) in the current flow direction to the cathode (30) of the zener diode (31), with the actuation apparatus (3) being activated by closing of the switch-on contact (23) after completion of the initial charging of the output circuit of the pulsed rectifier system, detected by a higher-level control or monitoring apparatus, and the reference voltage (30) being applied to the negative comparator input (35) and thus the voltage at the positive comparator input shortly before the zero crossing of the mains voltage (12) to positive values exceeding the reference voltage (30) when the potential profile, which is present at the tap of the voltage divider (36) and whose switching-frequency changes are smoothed by the capacitor (38), at the input (8) of the bridge path rises, and assuming that the voltage divider (25) is dimensioned appropriately, and, in consequence, switching of the comparator output (29) and/or actuation of the thyristor (18) being triggered and, in a corresponding manner, once the mean bridge branch input potential or the mains phase voltage (12), whose profile is largely identical with the exception of zero components, passes through 0, the actuation of the thyristor (18) is suppressed once again, and thus, ignoring minor overlaps which ensure the continuous profile of the input current at the zero crossing, the thyristor (18) is triggered only within those mains voltage half-cycles within which it is required in order to carry the mains phase current produced by the input inductance (9).

## Revendications

1. Dispositif pour précharger les condensateurs de sortie d'un système de redressement pulsé triphasé à trois points, qui comporte dans chaque phase, en réalisation classique, un pont monophasé de diodes (6), un transistor de puissance (7), une inductance amont (9) et des diodes de roue libre (15) et (17), **caractérisé en ce que** dans chaque phase, une diode du pont monophasé de diodes (6), qui est reliée côté anode à la borne d'entrée (8) et du côté cathode à l'anode de la diode de roue libre (15) branchée dans le sens passant par rapport au rail positif (16) de la tension de sortie, est remplacée par un thyristor (18) ayant la même direction passante et qu'en parallèle avec ce thyristor est disposée une branche de précharge (2) constituée par mise en série d'une résistance de précharge (19) et d'une diode (20) passante dans le sens passant du thyristor.

2. Procédé pour commander le dispositif de précharge selon la revendication 1, **caractérisé en ce qu'**après la précharge du circuit de sortie, comme il découle de façon connue en soi d'une condition de tension ou de temps par une unité de commande ou de contrôle de rang supérieur, le thyristor (18) est amorcé uniquement à l'intérieur de l'alternance positive de la tension du réseau, c'est-à-dire lorsque la borne (10) de tension du réseau possède un potentiel supérieur à celui du neutre (11) du réseau, alternance pendant laquelle le thyristor est nécessaire pour piloter le courant d'entrée injecté en continu par l'inductance d'entrée associée (9), et selon lequel, pour que soit garanti un flux de courant continu en tenant compte de l'ondulation à la fréquence de commutation du courant d'entrée dans l'inductance (9), l'amorçage s'effectue déjà juste avant le passage par zéro de la tension de phase (12) à des valeurs positives et est maintenu juste après le passage par zéro à des valeurs négatives.

3. Dispositif pour la mise en oeuvre du procédé selon la revendication 2, **caractérisé en ce que** dans chaque phase, une tension continue d'alimentation (22) à potentiel libre par rapport au potentiel négatif (21) ou à la masse au niveau de la cathode (4) du thyristor, est appliquée par l'intermédiaire d'un contacteur (23) à la partie (24) de traitement de signaux du dispositif de précharge, qui est formé par un diviseur de tension (25), un circuit (26) de production de la tension de référence, une diode de limitation (27) et un comparateur (28) dont la sortie (29) est raccordée à la grille du thyristor de précharge (18), et dans lequel la tension de référence est prélevée sur la cathode (30) d'une diode Zener (31), qui est reliée au rail positif de tension d'alimentation (34) par l'intermédiaire d'une résistance additionnelle (32) et est appliquée à l'entrée négative (35) du comparateur (28), et dans lequel l'anode de la diode Zener (31) est reliée à la masse (21) et en outre il est prévu entre le rail positif de tension d'alimentation (34) et l'entrée (8) côté réseau de la branche (1) du pont un diviseur ohmique de tension (25), dont la prise (36) est connectée à l'entrée positive (37) du comparateur (28) et est reliée par l'intermédiaire d'un condensateur de lissage (38) à la masse (21) et, pour obtenir une limitation de la tension qui apparaît sur l'entrée positive (37) du comparateur, est reliée au moyen de la diode (27) dans le sens passant à la cathode (30) de la diode Zener (31), et dans lequel à la fin de la précharge du circuit de sortie du système de redressement pulsé détectée par un dispositif de commande ou de contrôle de rang supérieur, le dispositif de commande (3) est activé par fermeture du contacteur (23) et de ce fait la tension de référence (30) est appliquée à l'entrée négative (35) du comparateur et ainsi, lors de l'accroissement de l'allure du potentiel présente sur la prise du diviseur de tension (36) et lissée en rapport avec dès variations liées à la fréquence de commutation, par un condensateur (38), à l'entrée (8) de la branche du pont au moyen d'un dimensionnement approprié du diviseur de tension (25), la tension présente sur la borne positive du comparateur dépasse la tension de référence (30) juste avant le passage par zéro de la tension (12) du réseau en direction de valeurs positives et de ce fait une commutation de la sortie (29) du comparateur ou une commande du thyristor (18) est déclenchée de façon correspondante après le passage du potentiel moyen d'entrée de la branche du pont ou de la tension de phase du réseau (12) qui se comporte d'une manière largement identique à l'exception de composantes nulles, la commande du thyristor (18) est à nouveau supprimée et ainsi, le thyristor (18), en négligeant de faibles chevauchements garantissant une allure faible continue du courant d'entrée lors du passage par zéro, est amorcé uniquement à l'intérieur des alternances de la tension du réseau, à l'intérieur desquelles le thyristor est requis pour piloter le courant de phase du réseau, injecté par l'inductance d'entrée (9).
